# EUROPÄISCHE PATENTSCHRIFT

(11) **EP 1 640 211 B1**
(45) Veröffentlichungstag und Bekanntmachung des Hinweises auf die Patenterteilung: **28.11.2007**
(21) Anmeldenummer: 05017929.0
(22) Anmeldetag: 18.08.2005
(51) Int. Cl.: B60Q 1/30, F21S 8/10

(54) **Fahrzeug-Leuchtenanordnung, insbesondere für Anhänger**
Rearlight for vehicles, especially trailers
Feu arrière pour véhicules, notamment remorques

(30) Priorität: 24.09.2004 DE 102004046763
(43) Veröffentlichungstag der Anmeldung: 29.03.2006
(73) Patentinhaber: KOMPLED GmbH & Co. KG, 89081 Ulm (DE)
(72) Erfinder: Koch, Josef, 89081 Ulm (DE)
(74) Vertreter: Weber, Gerhard

(56) Entgegenhaltungen:
- WO-A-03/074931
- DE-A1- 10 143 792
- DE-A1- 19 732 828
- DE-U1- 20 220 900
- US-B1- 6 254 262

## Beschreibung

Die Erfindung betrifft eine Fahrzeug-Leuchtenanordnung, insbesondere für Anhänger an Zugfahrzeugen.

Fahrzeug-Leuchtenanordnungen an Anhängern sind zum einen insbesondere durch Witterungseinflüsse starken mechanischen Belastungen ausgesetzt, welche vor allem durch Eindringen von Feuchtigkeit in das Leuchtengehäuse zu häufigen Ausfällen führt, und unterliegen zudem erfahrungsgemäß auch starken Schwankungen bei der elektrischen Versorgung über Kabel und Steckerverbindungen vom Zugfahrzeug aus, was gleichfalls Anlass für Ausfälle und Fehlfunktionen sein kann.

Aus der WO 03/074931 A1 ist eine Fahrzeug-Leuchte mit einer einzelnen Hochleistungs-Leuchtdiode bekannt. Eine elektronische Schaltung zur Ansteuerung der Diode ist in dem Leuchtengehäuse neben der Platine mit der Leuchtdiode angeordnet und kann eine Schalt-Wandlereinrichtung enthalten. Die US 6254262 B1 beschreibt eine Fahrzeugleuchte mit mehreren Leuchtdioden und einer hinter dem LED-Träger angeordneten elektronischen Schaltung in einem gemeinsamen Leuchtengehäuse. Die DE 19732828 A1 zeigt eine z. B. für Kfz-Rückleuchten geeignete Schaltungsanordnung zur Ansteuerung eines Leuchtdioden-Arrays. Das Leuchtdiodenarray bildet eine Parallelschaltung einer Mehrzahl von Leuchtdioden. Die Schaltungsanordnung enthält einen Pulsweitenmodulator und eine Induktivität in Serie zu der Paralellschaltung des Leuchtdioden-Arrays.

Der Erfindung liegt die Aufgabe zugrunde, eine kostengünstige, insbesondere funktionsstabile und langlebige Fahrzeug-Leuchtenanordnung, insbesondere für Lastfahrzeuganhänger anzugeben.

Die Erfindung ist im Patentanspruch 1 beschrieben. Die abhängigen Ansprüche enthalten vorteilhafte Ausgestaltungen und Weiterbildungen der Erfindung.

Die Kombination der Verwendung von lichtemittierenden Dioden in Verbindung mit einer getakteten Wandlereinrichtung innerhalb des Leuchtengehäuses erscheint durch den Aufwand für die Wandlereinrichtung zwar nachteilig gegenüber einer Strombegrenzung durch einen ohmschen Vorwiderstand, erbringt aber überraschend Vorteile einer solchen aufwendigeren Leuchtenanordnung, welche sich insbesondere auf längere Sicht auch wirtschaftlich als günstiger erweist. Durch den typischerweise bei über 90 % liegenden Wirkungsgrad eines getakteten Schaltwandlers ist der Leistungsverlust im Schaltwandler und damit auch die Wärmeentwicklung im Leuchtengehäuse gering. Es zeigt sich überraschend, dass dies zu einer wesentlichen Verringerung der Leuchtenausfälle wegen in abgedichtete Leuchtengehäuse eindringender Feuchtigkeit führt. Dem liegt die Erkenntnis des Anmelders zugrunde, dass die bei Leuchten mit höherem Wärmeverlust im Leuchtengehäuse auftretenden stärkeren Temperaturschwankungen die Dichtigkeit von Gehäusefugen, insbesondere zwischen verschiedenen Gehäusematerialien beeinträchtigen können und die mit Temperaturschwankungen im abgedichteten Leuchtengehäuse verbundenen Schwankungen des Innendrucks das Eindringen von Feuchtigkeit begünstigen. Durch die Verringerung der Temperaturschwankungen im Leuchtengehäuse aufgrund geringerer Verlustwärme im Leuchtenbetrieb kann daher die Betriebszeit einer solchen Fahrzeugleuchtenanordnung wesentlich verlängert und die an sich sehr große Lebensdauer von Leuchtdioden auch unter diesem Aspekt genutzt werden.

Als ein weiterer funktionaler und wirtschaftlich besonders bedeutsamer Vorteil erweist sich der Einsatz eines in die Leuchtenanordnung integrierten Schaltwandlers auch dadurch, dass der Betrieb der Leuchtenanordnung von der anliegenden Spannung im wesentlichen unabhängig ist. Dies ermöglicht auch bei stark schwankenden Betriebsspannungen, wie sie insbesondere in von einem Zugfahrzeug über Kabel und Steckverbindungen gespeisten Bordnetz eines Anhängers auftreten, einen Betrieb der Leuchtdioden in oder zumindest nahe bei einem optimalen Arbeitspunkt. Gegenüber einer Bordspannungsstabilisierung in einer zentralen Steuereinheit eines solchen Anhängers bietet die Integration von Schaltwandlern in die Einzelleuchtenanordnungen, wobei bei einem typischen Sattelauflieger mehrere. Einzelleuchten gegeben sind, den Vorteil, dass Störungen im Bordnetz, wie Kontaktkorrosion, Kriechströme etc., in der einzelnen Leuchte wieder ausgeglichen werden können. Ein besonderer Vorteil ist auch, dass dieselben Leuchten an Bordnetzen mit unterschiedlichen Nennspannungen universell eingesetzt werden können. Es können auch mehrere Leuchtenfunktionen, z. B. einer Heckleuchtenanordnung, in einem gemeinsamen Gehäuse angeordnet sein. Vorzugsweise ist jeder der unabhängigen Leuchtenfunktionen ein eigener Schaltwandler zugeordnet.

Schalt-Wandlereinrichtungen mit Induktivitäten sind an sich bekannt und können in den bekannten Aufbauprinzipien auch auf die vorliegende Erfindung angewandt werden. Die Schaltwandlereinrichtung ist vorteilhafterweise auf ein bestimmtes Verhalten einer Ausgangskenngröße, insbesondere eine weitgehend konstante, von Eingangskenngrößen unabhängige Ausgangsgröße eingestellt. Eine solche im wesentlichen konstante Ausgangsgröße kann beispielsweise ein konstanter Ausgangsstrom, eine konstante Ausgangsleistung und/oder eine konstante Ausgangsspannung sein. Es können auch verschiedene Ausgangskenngrößen in aneinander angrenzenden Betriebsbereichen jeweils konstant gehalten sein, beispielsweise konstante Spannung bis zu einem Stromgrenzwert, dann begrenzter Strom. Anstelle einer konstanten Ausgangskenngröße kann auch ein bestimmter Zusammenhang verschiedener Ausgangskenngrößen eingestellt sein. Die Schalt-Wandlereinrichtung ist vorteilhafterweise auf vorgebbares Verhalten von Ausgangskenngrößen regelbar. Die Ausgangskenngröße der Schalt-Wandlereinrichtung beaufschlagt die Leuchtmittelanordnung.

Die Leuchtmittelanordnung enthält wenigstens eine, vorzugsweise mehrere Leuchtdioden. Mehrere Leuchtdioden können vorteilhafterweise in mehreren parallelen Strompfaden und/oder in wenigstens einem Strompfad als Reihenschaltung angeordnet sein. Bei mehreren parallelen Strompfaden für dieselbe Leuchtenfunktion innerhalb eines Leuchtengehäuses kann bevorzugt vorgesehen sein, dass bei Ausfall eines der mehreren Strompfade der Strom durch einen oder mehrere andere parallele Strompfade ansteigt. Hierzu kann beispielsweise die Schalt-Wandlereinrichtung auf konstanten Ausgangsstrom oder konstante Ausgangsleistung eingestellt sein. Durch den Stromanstieg in den funktionierenden Strompfaden steigt auch die Lichtleistung in den dort angeordneten Dioden und die nach außen in Erscheinung tretende gesamte Lichtleistung der Leuchtenanordnung verändert sich weit weniger als den vollständigen Ausfall eines Strompfads entspricht. In größerem Abstand von der Leuchtenanordnung wirkt die Leuchtenanordnung dabei noch intakt und kann insbesondere eine Sicherheitsfunktion noch gut erfüllen. Andererseits ist der Ausfall eines Strompfads aus geringer Entfernung gut zu erkennen, so dass eine derart defekte Leuchtenanordnung bis zum Austausch in der Regel noch hinreichend funktioniert. Die Arbeitspunkte der Leuchtdioden und gegebenenfalls anderer Bauteile in parallelen Strompfaden sind vorteilhafterweise für den voll funktionsfähigen Zustand der Leuchtenanordnung so gewählt, dass nach einem Ausfall eines Strompfads die Dioden oder andere Bauelemente in den anderen Strompfaden auch mit dem angestiegenen Strom noch innerhalb zulässiger Betriebsbereiche liegen. Bei mehreren parallelen Strompfaden kann vorteilhafterweise in jedem Strompfad ein ohmsches Widerstandselement eingefügt sein, welches primär zur Symmetrierung der Strompfade dient.

Vorteilhafterweise sind mehrere Leuchtdioden auf einer gemeinsamen Platine, welche auch als flexibler Träger ausgeführt sein kann, angeordnet. Die Platine enthält wenigstens eine, vorzugsweise wenigstens zwei Leiterebenen mit jeweils eigenen Leiterstrukturen, insbesondere Leiterbahnen zur elektrischen Verbindung einzelner Bauelemente untereinander und mit Anschlusseinrichtungen. Bei mehreren Leiterebenen sind vorteilhafterweise Durchkontaktierungen zwischen unterschiedlichen Leiterebenen vorgesehen. Besonders vorteilhaft ist eine Ausführungsform, bei welcher eine Induktivität für die Schalt-Wandlereinrichtung unter Verwendung eines Ferritkerns mit mehreren Armen wenigstens eine Öffnung in der Platine aufweist, durch welche ein Arm des Ferritkerns hindurchragt und um welche in wenigstens einer Leiterebene spiralförmig eine Leiterbahn herangeführt ist. Das innere Ende der spiralförmigen Leiterbahn ist mittels einer Leiterbrücke oder einer Durchkontaktierung zu einer anderen Leiterebene kontaktierbar. Der Ferritkern kann zweiarmig als Ring oder vorzugsweise dreiarmig als E-I-Kern ausgeführt sein und insbesondere in letztgenannter Ausführung auch einen Luftspalt im mittleren Arm aufweisen. Die Platine kann auch mehr als eine Öffnung für die Arme des Ferritkerns und mehr als eine Leiterspirale aufweisen.

Besonders vorteilhaft ist eine Leuchtenanordnung mit ein oder mehreren Leuchtdioden und einer integrierten Schalt-Wandlereinrichtung auch in Verbindung mit einer Anschlussvorrichtung an ein Bordleitungsnetz des Fahrzeugs, insbesondere Anhängers mittels wenigstens eines eine Kabelisolierung durchdringenden und eine Kabelader kontaktierenden Kontakts, beispielsweise als Schneidkontakt oder Spitzenkontakt. Durch die Integration der Schalt-Wandlereinrichtung in die Leuchtenanordnung bleibt der mittlere Strom durch den Kontakt gering und weitgehend konstant auch bei stark schwankender Bordnetzspannung. Der Schneid- oder Steckkontakt ist vorteilhafterweise die dem Leuchtengehäuse nächste externe elektrische Verbindung. Der Kontakt, vorzugsweise wenigstens zwei Kontakte können auf Seiten des Leuchtengehäuses vorgesehen und in dieses integriert sein. In bevorzugter Ausführungsform ist am Leuchtengehäuse durch dieses ein Anschlusskabel abgedichtet hindurchgeführt, welches im Bereich des dem Leuchtengehäuse abgewandten Kabelendes in einen Verbinder mit Schneid- oder Spitzenkontakten eingesetzt.

Die Erfindung ist nachfolgend anhand bevorzugter Ausführungsbeispiele unter Bezugnahme auf die Abbildungen noch eingehend veranschaulicht. Dabei zeigt:
- Fig. 1: einen schematischen Aufbau einer Leuchtenanordnung,
- Fig. 2: eine Beschaltungsskizze.

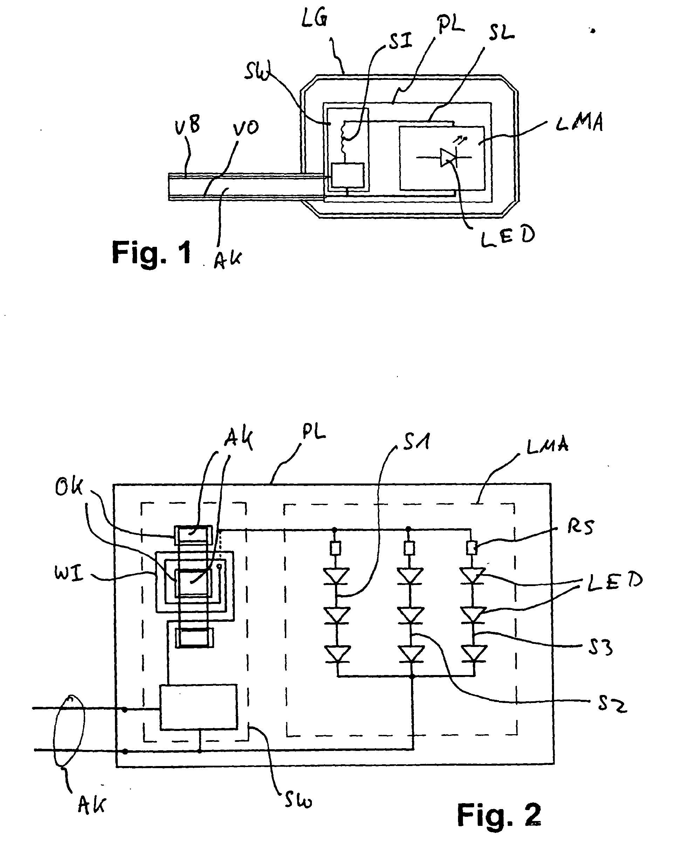

Die Fig. 1 zeigt schematisch eine Leuchtenanordnung mit einem vorteilhafterweise wasserdicht abgeschlossenen Leuchtengehäuse LG, durch welches ein mehradriges Kabel, z. B. mit einer auf Bezugspotential VO (elektrische Fahrzeugmasse) und einer auf Bordspannung VB liegenden Ader, ist durch eine Gehäusewand hindurchgeführt und im Innern des Gehäuses mit Leiterbahnen einer Platine PL kontaktiert ist. Auf der Platine sind eine Schalt-Wandlereinrichtung SW mit einer Induktivität SI sowie eine Leuchtmittelanordnung LMA angeordnet, wobei letztere aus der Ausgangsleitung SL von Schaltwandler SW und Induktivität gespeist ist. Durch Regelung der Ausgangskenngröße der Schalt-Wandlereinrichtung auf ein vorgebbares Verhalten, insbesondere einen im wesentlichen konstanten mittleren Wert der Ausgangsgröße wird die Leuchtmittelanordnung LMA im wesentlichen von der Eingangsspannung zwischen VB und VO unabhängig. Die Elektronik der Schalt-Wandlereinrichtung ist nur pauschal schematisch dargestellt. Solche Schalt-Wandlereinrichtungen sind an sich in verschiedenen Ausführungen bekannt.

Die Leuchtmittelanordnung LMA enthält vorteilhafterweise mehrere Leuchtdioden LED, welche in mehreren parallelen Strompfaden und/oder in Reihenschaltung angeordnet sein können. In Fig. 2 ist eine Leuchtmittelanordnung mit drei parallelen Signalwegen S1, S2, S3 skizziert, welche jeweils drei Leuchtdioden in Reihenschaltung aufweisen. In jedem Strompfad ist vorteilhafterweise ein Serienwiderstand RS angeordnet, welcher vorteilhafterweise nicht wie gebräuchlich primär zur Einstellung des Stroms durch die Reihenschaltung der Dioden dient, sondern vielmehr als Symmetrierwiderstand Bauteilstreuungen der Dioden ausgleichen soll, um den auf der gemeinsamen Speiseleitung SL von der Schalt-Wandlereinrichtung zugeführten Gesamtstrom gleichmäßig auf die mehreren Strompfade aufzuteilen. Der Spannungsabfall an dem Widerstand RS eines Strompfads sei im regulären Betrieb vorteilhafterweise geringer als der Spannungsabfall an einer der Leuchtdioden.

Die Schalt-Wandlereinrichtung ist vorteilhafterweise auf zumindest annähernd konstanten Wert von Strom oder elektrischer Leistung in der Leuchtmittelanordnung LMA eingestellt. Bei Ausfall eines Strompfads durch hochohmigen Defekt einer der Dioden wird der diesem Strompfad zugedachte Anteil am Gesamtstrom bzw. der gesamten in der Leuchtmittelanordnung aufgenommenen elektrischen Leistung vorteilhafterweise zumindest überwiegend auf die anderen beiden Strompfade verteilt, deren Leuchtdioden dann ein entsprechend höhere Lichtleistung abstrahlen. Hierdurch kann aus geringer Entfernung durch die nicht leuchtenden Dioden der Defekt erkannt werden, aus größerer Entfernung bleibt aber der Eindruck einer voll funktionsfähigen Leuchtenanordnung weitgehend erhalten. Der Strom durch die Leuchtdioden bei völlig intakter Leuchtmittelanordnung ist vorteilhafterweise so weit unter dem Grenzwert für den Durchlassstrom der Leuchtdioden liegend gewählt, dass der zusätzliche Stromanteil eines defekten Strompfads auch längerfristig ohne Grenzwertüberschreitung von den anderen Strompfaden übernommen werden kann. Für den Fall eines starken Überstroms, z. B. durch Kurzschluss in einem Strompfad kann der Serienwiderstand so dimensioniert sein, dass er nach Art einer Schmelzsicherung durchbrennt und den Strompfad hochohmig macht.

Für die Induktivität der Schalt-Wandlereinrichtung SW ist in Fig. 2 eine bevorzugte Ausführung skizziert, wonach in einer für die Schalt-Wandlereinrichtung und die Leuchtmittelanordnung gemeinsamen Platine mehrere Aussparungen OK vorgesehen sind, durch welche Arme eines dreiarmigen Ferritkerns (E-I-Kern) ragen. Um wenigstens eine dieser Aussparungen, vorzugsweise um die den mittleren Arm des Ferritkerns umschließende Öffnung verläuft in wenigstens einer Leiterebene eine Leiterbahn als Spule, vorzugsweise spiralförmig in wenigstens einer Leiterebene der Platine. Die Platine weist vorzugsweise wenigstens zwei Leiterebenen auf, so dass das innere Spiralende über eine Durchkontaktierung zu einer anderen Leiterebene wieder aus der Spirale nach außen geführt werden kann. Die Flächenverteilung auf der Platine ist nicht maßstäblich. Im Realfall nimmt die Schaltwandlereinrichtung weniger Fläche ein.

Induktivitäten mit auf ebenen, gegebenenfalls auch flexiblen Substanzen um eine Öffnung spiralförmig geführten Leiterbahnen als Spulenwicklung um einen Arm eines Ferritkerns sind an sich als fertige Bauelemente, auch in SMD-Technik bekannt, beispielsweise aus US 5 463 365 oder US 2004/0088841A1 oder EP1157395B1. Selbstverständlich können auch gebräuchliche Induktivitäten in der Schaltung der Leuchtenanordnung als Bauelemente auf der Platine eingesetzt sein.

Die Schalt-Wandlereinrichtung kann insbesondere nach dem Prinzip der Pulsweitenmodulation in an sich gebräuchlicher Weise arbeiten.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Fahrzeug-Leuchtenanordnung, insbesondere für Lastfahrzeuganhänger, bei welcher innerhalb eines Leuchtengehäuses (LG) eine Leuchtmittelanordnung (LMA) und Begrenzungseinrichtungen zur Begrenzung der elektrischen Leistungsaufnahme der Leuchtmittelanordnung (LMA) vorhanden sind wobei die Leuchtmittelanordnung (LMA) mehrere Leuchtdioden (LED) enthält und die Begrenzungseinrichtungen eine getaktete Schalt-Wandlereinrichtung (SW) enthalten, **dadurch gekennzeichnet, dass** die Wandlereinrichtung (SW) eine Induktivität (SI) enthält, dass mehrere Leuchtdioden gemeinsam mit der Wandlereinrichtung (SW) auf einer gemeinsamen Platine (PL) angeordnet sind, und dass zumindest eine außerhalb des Leuchtengehäuses (LG) vorliegende externe elektrische Verbindung in dem die Leuchtmittelanordnung (LMA) über die Wandleranordnung speisenden Stromkreis als ein eine Kabelisolierung durchdringender Schneiden- oder Spitzenkontakt ausgeführt ist.

2. Anordnung nach Anspruch 1, **dadurch gekennzeichnet, dass** die Leuchtmittelanordnung (LMA) wenigstens einen Strompfad (S1, S2, S3) mit mehreren in Reihe geschalteten Leuchtdioden (LED) enthält.

3. Anordnung nach Anspruch 1 oder 2, **dadurch gekennzeichnet, dass** die Leuchtmittelanordnung (LMA) mehrere parallele Strompfade (S1, S2, S3) mit jeweils wenigstens einer Leuchtdiode (LED) enthält.

4. Anordnung nach Anspruch 3, **dadurch gekennzeichnet, dass** die mehreren Strompfade (S1, S2, S3) jeweils ein ohmsches Serienwiderstandselement (RS) enthalten.

5. Anordnung nach Anspruch 3 oder 4, **dadurch gekennzeichnet, dass** zu mehreren parallelen Strompfaden (S1, S2, S3) eine gemeinsame Wandlereinrichtung (SW) vorgesehen ist.

6. Anordnung nach einem der Ansprüche 1 bis 5, **dadurch gekennzeichnet, dass** die Wandlereinrichtung (SW) auf einen im wesentlichen konstanten Ausgangsstrom als Ausgangskenngröße eingestellt ist.

7. Anordnung nach einem der Ansprüche 1 bis 5, **dadurch gekennzeichnet, dass** die Wandlereinrichtung (SW) auf eine im wesentlichen konstante Ausgangsleistung als Ausgangskenngröße eingestellt ist.

8. Anordnung nach einem der Ansprüche 1 bis 5, **dadurch gekennzeichnet, dass** die Wandlereinrichtung (SW) auf eine im wesentlichen konstante Ausgangsspannung als Ausgangskenngröße eingestellt ist.

9. Anordnung nach einem der Ansprüche 6 bis 8, **dadurch gekennzeichnet, dass** ein Regelkreis für die Ausgangskenngröße der Wandlereinrichtung (SW) vorhanden ist.

10. Anordnung nach Anspruch 1, **dadurch gekennzeichnet, dass** die Platine (PL) mehrere Leiterebenen enthält, welche innerhalb der Ebenen strukturiert sind.

11. Anordnung nach Anspruch 10, **dadurch gekennzeichnet, dass** die Induktivität (SI) der Wandlereinrichtung (SW) einen Ferritkern enthält, welcher mit wenigstens einem Arm durch eine Öffnung in der Platine (PL) durchgreift, und dass in wenigstens einer Leiterebene eine spiralförmige Leiterstruktur um die Aussparung verläuft und zumindest einen Teil einer Spule um den Arm des Ferritkerns bildet.

12. Anordnung nach Anspruch 11, **dadurch gekennzeichnet, dass** die dem Leuchtengehäuse (LG) nächste externe elektrische Verbindung als ein Schneiden- oder Spitzenkontakt ausgeführt ist.

13. Anordnung nach einem der Ansprüche 1 bis 12, **dadurch gekennzeichnet, dass** in einem Leuchtengehäuse (LG) Leuchtmittelanordnungen (LMA) zu zwei unabhängig schaltbaren Beleuchtungsfunktionen enthalten sind und jeder dieser Leuchtmittelanordnungen (LMA) eine eigene Schalt-Wandlereinrichtung (SW) zugeordnet ist.

14. Anordnung nach einem der Ansprüche 1 bis 13, **dadurch gekennzeichnet, dass** innerhalb eines Fahrzeug-Bordteitungsnetzes eine Mehrzahl von getrennten Leuchtengehäusen (LG) mit eigenen Schalt-Wandlereinrichtungen (SW) vorhanden sind.

15. Anordnung nach Anspruch 14, **dadurch gekennzeichnet, dass** das Fahrzeug ein Anhänger ist, dessen Bordnetz aus einem Zugfahrzeug gespeist ist und welcher keine zentrale Spannungsregelung für das gesamte Beleuchtungsnetz besitzt.

## Claims

1. Vehicle lamp arrangement, in particular for goods vehicle trailers, in which a lighting means arrangement (LMA) and limiting devices for limiting the electrical power consumption of the lighting means arrangement (LMA) are provided within a lamp housing (LG), with the lighting means arrangement (LMA) containing a plurality of light-emitting diodes (LED) and the limiting devices containing a pulsed switching converter device (SW), **characterized in that** the converter device (SW) contains a inductor (SI), **in that** a plurality of light-emitting diodes are arranged on a common printed circuit board (PL) together with the converter device (SW), and **in that** at least one external electrical connection which is present outside the lamp housing (LG) in the electrical circuit which feeds the lighting means arrangement (LMA) via the converter arrangement is designed as an insulation displacement contact or point contact which penetrates a cable insulation.

2. Arrangement according to Claim 1, **characterized in that** the lighting means arrangement (LMA) contains at least one current path (S1, S2, S3) with a plurality of light-emitting diodes (LED) which are connected in series.

3. Arrangement according to Claim 1 or 2, **characterized in that** the lighting means arrangement (LMA) contains a plurality of parallel current paths (S1, S2, S3) with at least one light-emitting diode (LED) in each case.

4. Arrangement according to Claim 3, **characterized in that** the plurality of parallel current paths (S1, S2, S3) each contain a non-reactive series resistor element (RS).

5. Arrangement according to Claim 3 or 4, **characterized in that** a common converter device (SW) is provided for a plurality of parallel current paths (S1, S2, S3).

6. Arrangement according to one of Claims 1 to 5, **characterized in that** the converter device (SW) is set to a substantially constant output current as output characteristic variable.

7. Arrangement according to one of Claims 1 to 5, **characterized in that** the converter device (SW) is set to a substantially constant output power as output characteristic variable.

8. Arrangement according to one of Claims 1 to 5, **characterized in that** the converter device (SW) is set to a substantially constant output voltage as output variable.

9. Arrangement according to one of Claims 6 to 8, **characterized in that** a control loop for the output characteristic variable of the converter device (SW) is present.

10. Arrangement according to Claim 1, **characterized in that** the printed circuit board (PL) contains a plurality of conductor planes which are structured within the planes.

11. Arrangement according to Claim 10, **characterized in that** the inductor (SI) of the converter device (SW) contains a ferrite core which passes through an opening in the printed circuit board (PL) with at least one arm, and **in that** a helical conductor structure runs around the cutout in at least one conductor plane and forms at least one part of a coil around the arm of the ferrite core.

12. Arrangement according to Claim 11, **characterized in that** the external electrical connection closest to the lamp housing (LG) is designed as an insulation displacement contact or point contact.

13. Arrangement according to one of Claims 1 to 12, **characterized in that** a lamp housing (LG) contains lighting means arrangements (LMA) for two lighting functions which can be independently switched, and each of these lighting means arrangements (LMA) have their own associated switching converter device (SW).

14. Arrangement according to one of Claims 1 to 13, **characterized in that** a plurality of separate lamp housings (LG) with their own switching converter devices (SW) are present within an on-board vehicle electrical system.

15. Arrangement according to Claim 14, **characterized in that** the vehicle is a trailer whose on-board electrical system is fed by a towing vehicle and which does not have a central voltage control system for the entire lighting network.

## Revendications

1. Feu pour véhicule, notamment pour remorque, dans lequel, à l'intérieur d'un boîtier de phare (LG), sont présents un dispositif d'éclairage (LMA) et des limiteurs pour limiter la puissance électrique consommée par le dispositif d'éclairage (LMA), le dispositif d'éclairage (LMA) contenant plusieurs diodes électroluminescentes (LED) et les limiteurs contenant un transformateur à découpage synchronisé (SW), **caractérisé en ce que** le transformateur (SW) contient une inductance (SI), que plusieurs diodes électroluminescentes sont disposées avec le transformateur (SW) sur une platine commune (PL), et qu'au moins une liaison externe située hors du boîtier de phare (LG), dans le circuit électrique alimentant le dispositif d'éclairage (LMA) via le transformateur, est configurée comme un contact à couteau ou à pointe traversant une isolation de câble.

2. Dispositif selon la revendication 1, **caractérisé en ce que** le dispositif d'éclairage (LMA) contient au moins une piste conductrice (S1, S2, S3) avec plusieurs diodes électroluminescentes (LED) connectées en série.

3. Dispositif selon la revendication 1 ou la revendication 2, **caractérisé en ce que** le dispositif d'éclairage (LMA) contient plusieurs pistes conductrices parallèles (S1, S2, S3) avec chacune au moins une diode électroluminescente (LED).

4. Dispositif selon la revendication 3, **caractérisé en ce que** les plusieurs pistes conductrices (S1, S2, S3) contiennent chacune un élément de résistance en série ohmique (RS).

5. Dispositif selon la revendication 3 ou la revendication 4, **caractérisé en ce qu'**il est prévu un transformateur (SW) commun à plusieurs pistes conductrices parallèles (S1, S2, S3).

6. Dispositif selon l'une quelconque des revendications 1 à 5, **caractérisé en ce que** le transformateur (SW) est réglé sur un courant de sortie sensiblement constant en guise de grandeur caractéristique de sortie.

7. Dispositif selon l'une quelconque des revendications 1 à 5, **caractérisé en ce que** le transformateur (SW) est réglé sur une puissance de sortie sensiblement constante en guise de grandeur caractéristique de sortie.

8. Dispositif selon l'une quelconque des revendications 1 à 5, **caractérisé en ce que** le transformateur (SW) est réglé sur une tension de sortie sensiblement constante en guise de grandeur caractéristique de sortie.

9. Dispositif selon l'une quelconque des revendications 6 à 8, **caractérisé en ce qu'**est présent un circuit de régulation pour la grandeur caractéristique de sortie du transformateur (SW).

10. Dispositif selon la revendication 1, **caractérisé en ce que** la platine (PL) contient plusieurs nappes de conducteurs qui sont dotées d'une structure propre.

11. Dispositif selon la revendication 10, **caractérisé en ce que** l'inductance (SI) du transformateur (SW) contient un noyau de ferrite qui passe au moins une branche à travers une ouverture dans la platine (PL), et **en ce qu'**une structure conductrice en spirale d'au moins une nappe de conducteurs court autour de l'évidement et forme au moins une partie d'une bobine autour de la branche du noyau de ferrite.

12. Dispositif selon la revendication 11, **caractérisé en ce que** la liaison électrique externe voisine du boîtier de phare (LG) est configurée comme un contact à couteau ou à pointe.

13. Dispositif selon l'une quelconque des revendications 1 à 12, **caractérisé en ce que** dans un boîtier de phare (LG) sont contenus des dispositifs d'éclairage (LMA) ayant deux fonctions d'éclairage commutables indépendamment, et qu'à chacun de ces dispositifs d'éclairage (LMA) est associé un transformateur à découpage (SW) propre.

14. Dispositif selon l'une quelconque des revendications 1 à 13, **caractérisé en ce que** dans un réseau électrique de bord du véhicule sont présents une multitude de boîtiers de phare (LG) séparés avec des transformateurs à découpage (SW) propres.

15. Dispositif selon la revendication 14, **caractérisé en ce que** le véhicule est une remorque dont le réseau de bord est alimenté par un véhicule tracteur et qui ne possède pas de régulation centralisée de la tension pour le réseau d'éclairage global.
